# EUROPÄISCHE PATENTSCHRIFT

(11) **EP 4 062 994 B1**
(45) Veröffentlichungstag und Bekanntmachung des Hinweises auf die Patenterteilung: **08.11.2023**
(21) Anmeldenummer: 21164518.9
(22) Anmeldetag: 24.03.2021
(51) Int. Cl.: B01D 46/00, B01D 46/12, F24F 8/108

(54) **VERFAHREN ZUR MONTAGE EINER FILTERZELLE FÜR EINE RAUMLUFTTECHNISCHE ANLAGE**
METHOD FOR MOUNTING A FILTER CELL FOR A ROOM AIR INSTALLATION
PROCÉDÉ DE MONTAGE D'UNE CELLULE FILTRANTE POUR UNE INSTALLATION TECHNIQUE D'AIR AMBIANT

(43) Veröffentlichungstag der Anmeldung: 28.09.2022
(73) Patentinhaber: TROX GmbH, 47506 Neukirchen-Vluyn (DE)
(72) Erfinder: Bringsken, Henning, 47447 Moers (DE)
(74) Vertreter: Dr. Stark & Partner Patentanwälte mbB

(56) Entgegenhaltungen:
- US-A- 3 246 457
- US-A- 5 693 108

## Beschreibung

Die Erfindung betrifft ein Verfahren zur Montage einer Filterzelle für eine raumlufttechnische Anlage zur Abscheidung von Feinstaub und/oder von Schwebstoffen, wie beispielsweise von Aerosolen, von toxischen Stäuben, von Viren und/oder von Bakterien, aus der Zu- und Abluft, wobei die Filterzelle ein kastenförmiges Gehäuse sowie zumindest eine in dem Gehäuse angeordnete rechteckige Filterplatte aufweist, wobei das Gehäuse sechs Gehäuseflächen aufweist, wobei zwei Gehäuseflächen als Durchtrittsflächen, nämlich als Einlassfläche mit zumindest einer, vorzugsweise rechteckigen, Eintrittsöffnung und als Auslassfläche mit zumindest einer, vorzugsweise rechteckigen, Austrittsöffnung, ausgebildet sind und die vier verbleibenden Gehäuseflächen als die beiden Durchtrittsflächen verbindende geschlossene Seitenflächen ausgebildet sind und einen von der Einlassfläche zur Auslassfläche verlaufenden Strömungskanal mit rechteckigem Querschnitt bilden, wobei diese Filterplatte zwei parallel ausgerichtete und parallel zu der Eintrittsöffnung und zu der korrespondierenden Austrittsöffnung ausgerichtete Längskanten und zwei parallele Seitenkanten aufweist, wobei die eine Längskante dieser Filterplatte dichtend an der Innenseite der einen Durchtrittsfläche anliegt, die andere Längskante dieser Filterplatte dichtend an der Innenseite der anderen Durchtrittsfläche anliegt und die beiden Seitenkanten dieser Filterplatte dichtend an der Innenseite jeweils einer Seitenfläche anliegen, und wobei die Ausrichtung dieser Filterplatte in Bezug auf die Eintrittsöffnung und die Austrittsöffnung so gewählt ist, dass die durch die Eintrittsöffnung in das Gehäuse einströmende und durch die korrespondierende Austrittsöffnung aus dem Gehäuse ausströmende Luft diese Filterplatte durchströmt.

Derartige Filterzellen eigenen sich für große Volumenströme und zeichnen sich durch lange Filterstandzeiten aus. Bekannte Filterzellen weisen ein Gehäuse auf, das aus sechs separat ausgebildeten Gehäuseflächen aufgebaut ist, die die sechs Seitenflächen des Gehäuses bilden. Zwei dieser sechs Gehäuseflächen sind als Durchtrittsflächen ausgebildet, die entweder zumindest eine Einlassöffnung bzw. zumindest eine Auslassöffnung aufweisen. Sofern eine Durchtrittsfläche mehr als eine Einlassöffnung bzw. mehr als eine Auslassöffnung aufweist, ist der jeweilige Bereich zwischen zwei benachbarten Eintritts- bzw. Austrittsöffnungen als separater Steg ausgebildet. Die sechs Seitenflächen und eventuelle Stege werden zusammengenietet und anschließend mit den Filterplatten mit einem flüssigen PU-Kleber dicht vergossen. Dieses Herstellverfahren ist aufgrund der hohen Anzahl an Einzelkomponenten, die zusammengesetzt werden müssen, sehr aufwändig. Auch sind wegen der langen Trocknungszeiten die Fertigungszeiten lang.

Aufgabe der Erfindung ist es, die vorgenannten Nachteile zu vermeiden und ein Verfahren anzugeben, mittels dem eine Filterzelle leichter und schneller herstellbar ist.

Diese Aufgabe wird dadurch gelöst, dass eine Durchtrittsfläche jeweils mit den beiden an gegenüberliegenden Kanten angrenzenden Seitenflächen, die im zusammengesetzten Zustand mit einer Seitenkante jeder Filterplatte in Kontakt sind, einteilig ausgebildet ist und dass in Bezug auf die verbleibenden drei Gehäuseflächen die andere Durchtrittsfläche sowie die beiden anderen Seitenflächen jeweils separat oder aber einteilig mit zumindest einer der verbleibenden Gehäuseflächen ausgebildet ist(sind) und dass alle offenen Gehäusekanten verklebt und damit abgedichtet werden. Die sechs Gehäuseflächen sind jeweils in einem rechten Winkel zueinander ausgerichtet.

Durch das erfindungsgemäße Verfahren wird die Filterzelle durch das Verkleben zum einen gegenüber der Umgebung im Bereich aller Kanten abgedichtet.

Ferner wird zum einen jede der beiden Durchtrittflächen im Kontaktbereich mit einer angrenzenden separat ausgebildeten Seitenfläche und zum anderen jede einteilig mit einer Durchtrittsfläche ausgebildete Seitenfläche im Kontaktbereich mit einer benachbarten separat ausgebildeten Seitenfläche fixiert. Insoweit sind alle offenen Kantenbereiche durch das Verkleben verschlossen.

Durch das erfindungsgemäße Verfahren können die Montagezeit und die Durchlaufzeit deutlich reduziert werden. Insoweit erlaubt das erfindungsgemäße Verfahren eine deutlich schnellere Herstellung einer Filterzelle. Das Gehäuse kann beispielsweise aus nur vier Teilen, beispielsweise aus vier Blechteilen, und der entsprechenden Anzahl an gewünschten Filterplatten hergestellt werden. Durch den Einsatz des erfindungsgemäßen Verfahrens kann auch die Konstruktion der Filterzelle selbst vereinfacht werden. Es sind keine Nieten oder Schrauben erforderlich. Auch ein Schweißen ist nicht erforderlich. Ferner kann das Gesamtgewicht bei gleichzeitig geringerem Kleberverbrauch reduziert werden. Dies führt zu einer Reduzierung der Herstellkosten. Der verwendete Kleber dient sowohl der Abdichtung des Gehäuses als auch der Fixierung der Gehäuseflächen, d. h. der Kleber sorgt für die Dichtigkeit und für die Stabilisierung des Gehäuses.

Die mittels des erfindungsgemäßen Verfahrens hergestellte Filterzelle kann beispielsweise als Mini Pleat Filterzelle für die Abscheidung von Feinstaub und von Schwebstoffen wie z. B. Aerosolen, toxischen Stäuben, Viren, Bakterien aus der Zu- und Abluft in raumlufttechnischen Anlagen mit großen Volumenströmen und mit langen Filterstandzeiten eingesetzt werden. Die Filterzelle kann auch zur Feinstaubfilterung als Vor- oder Endfilter in raumlufttechnischen Anlagen zur Abscheidung von Feinstaub eingesetzt werden. Die Filterzellen eignen sich auch als Schwebstofffilter in Form eines Hauptfilters oder eines Endfilters, sofern hohe Anforderungen an die Luftreinheit und die Keimfreiheit beispielsweise in der Industrie, in der Forschung, in der Medizin, in der Pharmazie oder in der Nukleartechnik erzielt werden sollen.

Es bietet sich an, wenn vor dem Einsetzen der Filterplatte(n) in das herzustellende Gehäuse auf die Innenseite jeder Durchtrittsfläche in dem Bereich, der im zusammengesetzten Zustand mit einer Längskante jeder Filterplatte in Kontakt ist, und auf die Innenseite jeder der zwei Seitenflächen, die im zusammengesetzten Zustand mit einer Seitenkante jeder Filterplatte in Kontakt sind, Kleber aufgebracht wird. Bei einer solchen Ausgestaltung bewirkt der Kleber zusätzlich zum einen eine Fixierung der Filterplatten in dem Gehäuse und zum anderen eine Abdichtung der Filterplatte gegenüber der Innenseite der jeweiligen Gehäusefläche.

Bei einer bevorzugten Ausführungsform kann eine Durchtrittsfläche jeweils mit den beiden an gegenüberliegenden Kanten angrenzenden Seitenflächen, die im zusammengesetzten Zustand mit einer Seitenkante jeder Filterplatte in Kontakt sind, einteilig ausgebildet sein und in Bezug auf die verbleibenden drei Gehäuseflächen die andere Durchtrittsfläche sowie die beiden anderen Seitenflächen jeweils separat ausgebildet sein,
- wobei die Durchtrittsfläche und die beiden einteilig mit dieser Durchtrittsfläche ausgebildeten Seitenflächen als, vorzugsweise durch Stanzen erzeugte, Platine ausgebildet sind,
- wobei auf die Innenseite der Durchtrittsfläche in den Bereichen, die im zusammengesetzten Zustand mit einer Längskante einer Filterplatte in Kontakt sind, und auf die Innenseite jeder der zwei Seitenflächen, die im zusammengesetzten Zustand mit einer Seitenkante jeder Filterplatte in Kontakt sind, Kleber aufgebracht wird,
- wobei, vorzugsweise anschließend, auf den mit dem Kleber versehenen Bereich der Durchtrittsfläche jede Filterplatte mit einer ihrer beiden Längskanten aufgesetzt wird,
- wobei, vorzugsweise anschließend, die beiden angrenzenden Seitenflächen so verlagert, vorzugsweise umgebogen, werden, bis sie mit der jeweils angrenzenden Seitenkante jeder Filterplatte in Kontakt sind,
- wobei, vorzugsweise anschließend, die beiden seitlichen offenen Gehäuseflächen mit je einer Seitenfläche verschlossen werden und
- wobei, vorzugsweise anschließend, die oben offene Gehäusefläche mit der anderen Durchtrittsfläche verschlossen wird, wobei vor dem Verschließen auf die freie Längskante jeder Filterplatte und/oder auf die Innenseite der anderen Durchtrittsfläche in den Bereichen, die im zusammengesetzten Zustand mit der Längskante einer Filterplatte in Kontakt sind, Kleber aufgebracht wird.

Bei einer solchen Ausgestaltung besteht das Gehäuse aus vier Teilen, nämlich der Durchtrittsfläche mit den beiden einteilig mit dieser Durchtrittsfläche ausgebildeten Seitenflächen sowie der anderen Durchtrittsfläche sowie den zwei separat ausgebildeten Seitenflächen.

Nach dem Verschließen des Gehäuses mit der anderen Durchtrittsfläche kann das zusammengesetzte Gehäuse, vorzugsweise bis zum Aushärten des Klebers, in einen Rahmen gespannt werden. Der Rahmen sorgt für eine optimale Ausrichtung der zusammengeklebten Gehäuseflächen und verhindert, dass sich miteinander verklebte Gehäuseflächen und infolgedessen auch die im Inneren des Gehäuses befindlichen Filterplatten in ihrer Position verändern, solange der Kleber noch nicht hinreichend getrocknet ist.

Dabei kann vor dem Aufsetzen einer Filterplatte auf den mit dem Kleber versehenen Bereich der Durchtrittsfläche, die mit den beiden an gegenüberliegenden Kanten angrenzenden Seitenflächen, die im zusammengesetzten Zustand mit einer Seitenkante jeder Filterplatte in Kontakt sind, einteilig ausgebildet sein, durch die betreffende(n) Eintritts- bzw. Austrittsöffnung(en) ein Anlageelement mit zumindest einer Anlagefläche geführt werden, wobei die Anzahl an Anlageflächen der Anzahl an aufzusetzenden Filterplatten entspricht. Die zu einer Eintritts- bzw. Austrittsöffnung gehörenden Anlageflächen können schräg aufeinander zuweisend ausgerichtet sein und damit eine dachähnliche Ausbildung haben. Nach Einführen in die betreffende Eintritts- bzw. Austrittsöffnungen können die beiden Filterplatten an die Anlageflächen des Anlageelementes angelegt werden. Die Filterplatten können nach dem Aufsetzen nicht ungewollt umkippen. Während der Trocknung des Klebers liegen die aufgesetzten Filterplatten an der jeweiligen Anlagefläche an.

Sowohl die beiden gegenüberliegenden Kanten der Durchtrittsfläche als auch die gegenüberliegenden Kanten der beiden Seitenflächen, die einteilig mit dieser Durchtrittsfläche ausgebildet sind, können jeweils eine Abkantung aufweisen, wobei die Abkantungen im zusammengesetzten Zustand des Gehäuses in Richtung der durch diese Abkantungen an drei Seiten umschließenden Gehäusefläche zugewandt sind. Die Abkantungen weisen vorzugsweise eine maximale Höhe von rund 20 mm auf. Diese Abkantungen sind ausreichend, um eine hinreichende Kontaktfläche, die beispielsweise mit Kleber versehen werden kann, zu der angrenzenden Gehäusefläche und damit eine ausreichende Fixierung nach Aufbringen von Kleber zu gewährleisten. Auf der anderen Seite erlaubt eine Abkantung in diesem Maße auch das Einlegen in einer CNC-Klebeauftragsmaschine.

Der Abstand zwischen den gegenüberliegenden Abkantungen der Durchtrittsfläche kann, vorzugsweise um die vierfache Materialstärke der Abkantung, größer sein als der Abstand zwischen den jeweils gegenüberliegenden Abkantungen jeder Seitenfläche.

Bei zumindest einer separat ausgebildeten Seitenfläche weisen die beiden gegenüberliegenden Kanten, die im zusammengesetzten Zustand in Kontakt mit einer anderen Seitenfläche sind, jeweils eine Abkantung auf, wobei jede der beiden Abkantungen im zusammengesetzten Zustand des Gehäuses an der Außenseite der jeweils angrenzenden Seitenfläche anliegt. Der Abstand zwischen den Abkantungen zweier gegenüberliegenden Kanten ist insoweit etwas größer als die Breite des Gehäuses. Die Abkantungen weisen vorzugsweise eine maximale Höhe von rund 20 mm auf.

Zumindest zwei gegenüberliegende Kanten, vorzugsweise alle vier Kanten, der anderen Durchtrittfläche weisen jeweils eine Abkantung auf, wobei die andere Durchtrittsfläche so angebracht wird, dass jede der zwei, vorzugsweise vier, Abkantungen im zusammengesetzten Zustand des Gehäuses an der Außenseite der jeweils angrenzenden Seitenfläche anliegt. Auch hier ist der Abstand zwischen den Abkantungen im Bereich zweier gegenüberliegender Kanten etwas größer als die Breite des Gehäuses. Die Abkantungen weisen vorzugsweise eine maximale Höhe von rund 20 mm auf.

Die Durchtrittsfläche und die beiden einteilig mit dieser Durchtrittsfläche ausgebildeten Seitenflächen und/oder die andere Durchtrittsfläche und/oder die beiden anderen Seitenflächen kann(können) aus Blech bestehen.

Der Kleber kann Polyurethan umfassen. Bei einer solchen Ausgestaltung ist der Kleber als PU-Kleber ausgebildet.

Mehrere Filterplatten können zickzackförmig in dem Gehäuse derart angeordnet werden, dass sich zwei benachbarte Filterplatten jeweils an einer Längskante berühren und die sich berührenden Längskanten in dem Bereich der Innenseite der angrenzenden Durchtrittsfläche in Kontakt sind, der zwischen zwei benachbarten Eintrittsöffnungen bzw. zwischen zwei benachbarten Austrittsöffnungen angeordnet ist. Bei einem zickzackförmigen Verlauf ist der Anstellwinkel bei allen Filterplatten gleich.

Es ist aber auch durchaus möglich, dass die Anordnung der Filterplatten in dem Gehäuse nach Art von Sägezähnen eines Sägeblattes ausgebildet ist, wobei sich zwei benachbarte Filterplatten jeweils an einer ihrer beiden Längskanten berühren und die beiden sich jeweils berührenden Längskanten in dem Bereich mit der Innenseite der angrenzenden Durchtrittsfläche in Kontakt sind, der zwischen zwei benachbarten Eintrittsöffnungen bzw. zwischen zwei benachbarten Austrittsöffnungen angeordnet ist. Bei einer solchen Anordnung ist der Anstellwinkel der ersten, der dritten, der fünften usw. Filterplatte ungleich dem Anstellwinkel der zweiten, der vierten, usw. Filterplatte.

In der einen Durchtrittsfläche können mehrere, parallel zueinander angeordnete Eintrittsöffnungen, und/oder in der anderen Durchtrittsfläche können mehrere parallel zueinander angeordnete Austrittsöffnungen vorgesehen sein. Die Eintrittsöffnungen und die Austrittsöffnungen können in der generellen Strömungsrichtung gesehen versetzt zueinander angeordnet sein. Bei einer solchen Ausgestaltung ist die Anzahl an Eintrittsöffnungen üblicherweise um eine Öffnung größer als die Anzahl an Austrittsöffnungen.

Im Folgenden werden in den Zeichnungen dargestellte Ausführungsbeispiele der Erfindung erläutert. Es zeigen:
- Fig. 1a: eine schräge Draufsicht auf eine Platine aus Blech, umfassend eine Durchtrittsfläche, die einteilig mit an zwei gegenüberliegenden Kanten angrenzenden Seitenflächen ausgebildet ist, die im zusammengesetzten Zustand mit einer Seitenkante jeder Filterplatte in Kontakt sind, wobei sowohl die beiden gegenüberliegenden Kanten der Durchtrittsfläche als auch die gegenüberliegenden Kanten der beiden Seitenflächen jeweils eine Abkantung aufweisen,
- Fig. 1b: das Detail "b" aus Fig. 1a,
- Fig. 1c: einen Schnitt in Richtung c-c durch den Teilbereich des Gegenstandes nach Fig. 1a,
- Fig. 2: den Gegenstand nach Fig. 1a, wobei auf der Durchtrittsfläche insgesamt sechs Filterplatten zickzackförmig angeordnet sind,
- Fig. 3a: eine Draufsicht auf den Gegenstand nach Fig. 2, wobei die Seitenflächen nach oben umgebogen worden sind,
- Fig. 3b: das Detail "b" aus Fig. 3a,
- Fig. 4a: den Gegenstand nach Fig. 3a, wobei die beiden seitlich offenen Gehäuseflächen mit je einer separat ausgebildeten Seitenfläche verschlossen worden sind,
- Fig. 4b: das Detail "b" aus Fig. 4a,
- Fig. 4c: eine schräge Draufsicht auf eine separat ausgebildete Seitenfläche,
- Fig. 5a: den Gegenstand nach Fig. 4a, wobei die oben offene Gehäusefläche mit der anderen, separat ausgebildeten Durchtrittsfläche verschlossen worden ist,
- Fig. 5b: das Detail "b" aus Fig. 5a,
- Fig. 5c: ein Ansicht auf die Innenseite der separat ausgebildeten Durchtrittsfläche,
- Fig. 6: einen Rahmen zum Einspannen des zusammengesetzten Gehäuses im ausgeklappten Zustand,
- Fig. 7: den Rahmen nach Einsetzen der zusammengesetzten Filterzelle,
- Fig. 8: den verschlossenen Rahmen mit der darin eingespannten Filterzelle,
- Fig. 9: eine Draufsicht auf ein Anlageelement und
- Fig. 10: einen Schnitt durch eine erfindungsgemäße Filterzelle.

In allen Figuren werden für gleiche bzw. gleichartige Bauteile übereinstimmende Bezugszeichen verwendet.

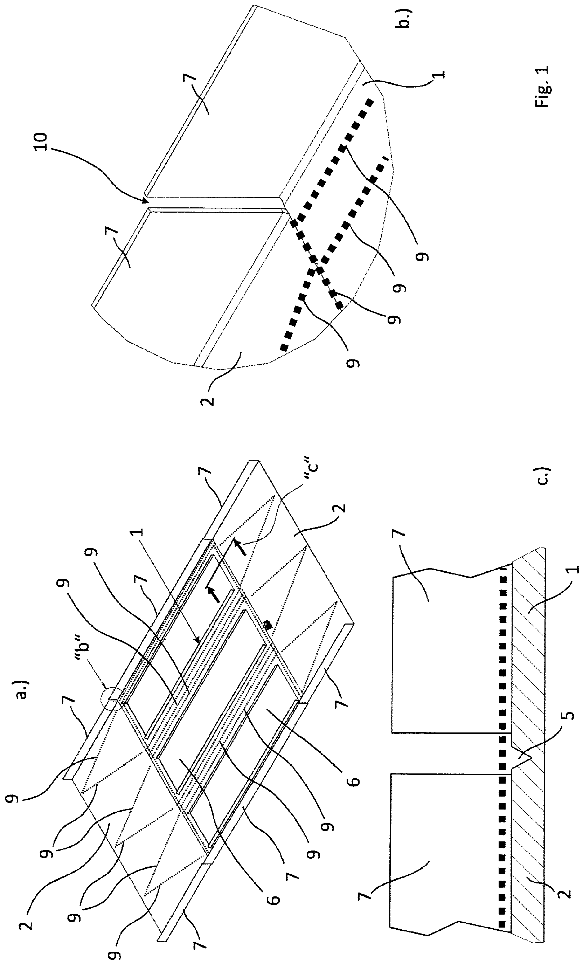

Fig. 1a zeigt eine flach ausgebildete Platine, die beispielsweise durch Stanzen hergestellt worden ist. Die Platine umfasst eine Durchtrittsfläche 1, die einteilig mit zwei Seitenflächen 2 ausgebildet ist. Diese beiden Seitenflächen 2 sind im zusammengesetzten Zustand in Kontakt mit einer Seitenkante 3 jeder Filterplatte 4.

Um das spätere Hochbiegen der Seitenflächen 2 zu erleichtern, kann im Bereich der jeweiligen Biegelinie beispielsweise eine Einkerbung 5 eingebracht worden sein. In dem dargestellten Ausführungsbeispiel sind in der Durchtrittsfläche 1 drei Öffnungen, bei denen es sich beispielsweise um Eintrittsöffnungen 6 handeln kann, vorgesehen, die rechteckig ausgebildet sind.

Wie Fig. 1a zu entnehmen ist, weisen die beiden gegenüberliegenden Kanten der Durchtrittsfläche 1 und auch die gegenüberliegenden Kanten der beiden Seitenflächen 2, die einteilig mit dieser Durchtrittsfläche 1 ausgebildet sind, jeweils eine Abkantung 7 auf, deren Höhe vorzugsweise nicht größer als 20 mm ist. Die Abkantungen 7 sind im zusammengesetzten Zustand des Gehäuses in Richtung der durch diese Abkantungen 7 an drei Seiten umschließenden Gehäusefläche zugewandt.

Wie Fig. 1b zu entnehmen ist, ist der Abstand zwischen den beiden gegenüberliegenden Abkantungen 7 der Durchtrittsfläche 1 größer als der Abstand zwischen den beiden jeweils gegenüberliegenden Abkantungen 7 jeder Seitenfläche 2. So ist der Abstand vorzugsweise um die vierfache Materialstärke einer Abkantung 7 größer.

Wie Fig. 1a zeigt, ist auf die Innenseite der Durchtrittsfläche 1 in den Bereichen, die im zusammengesetzten Zustand mit einer der beiden Längskanten 8 der Filterplatte 4 in Kontakt sind, und auf die Innenseite jeder der beiden Seitenflächen 2 in den Bereichen, die im zusammengesetzten Zustand mit einer der beiden Seitenkanten 3 jeder Filterplatte 4 in Kontakt sind, Kleber 9 aufgebracht.

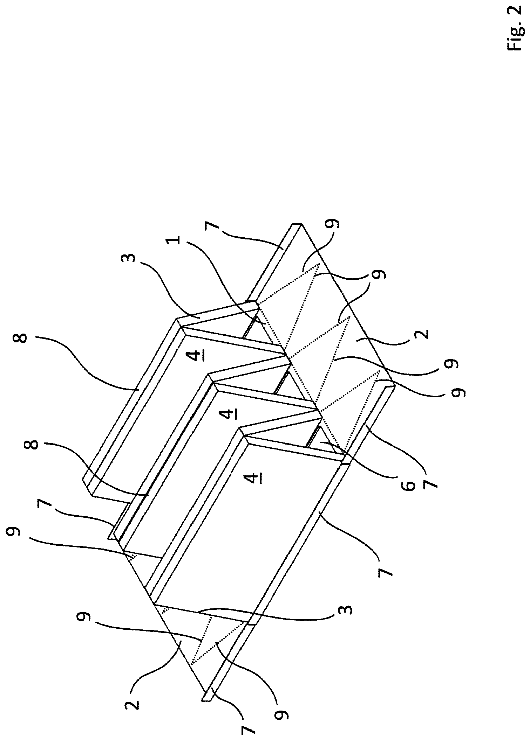

In einem nächsten Schritt werden auf die mit Kleber 9 versehenen Bereiche der Durchtrittsfläche 1 die Filterplatten 4 aufgesetzt. Dies ist in Fig. 2 erkennbar. Beim Aufsetzen wird jede Filterplatte 4 mit einer ihrer beiden Längskanten 8 auf den mit dem Kleber 9 versehenen Bereich aufgesetzt. Die Filterplatten 4 sind in dem dargestellten Ausführungsbeispiel so aufgesetzt, dass sich ein zickzackförmiger Verlauf ergibt. Damit berühren sich zwei Filterplatten 4, die sich an gegenüberliegenden Seiten einer Eintrittsöffnung 6 befinden, an einer Längskante 8.

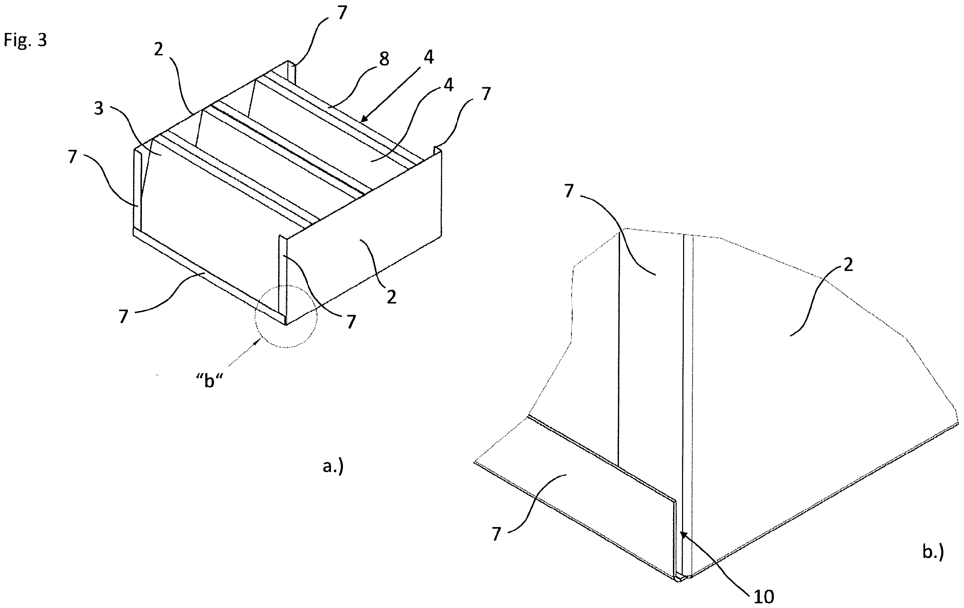

Dann werden die beiden angrenzenden Seitenflächen 2 so verlagert (umgebogen), bis sie mit der jeweils angrenzenden Seitenkante 3 jeder Filterplatte 4 in Kontakt sind. Dies ist in Fig. 3a dargestellt. Die Verlagerung erfolgt um 90°.

Da der Abstand der gegenüberliegenden Abkantungen 7 im Bereich jeder Seitenfläche 2 kleiner als der Abstand der Abkantungen 7 im Bereich der Durchtrittsfläche 1 ist, stehen die Abkantungen 7 der Durchtrittsfläche 1 nach dem Umbiegen gegenüber den Abkantungen 7 der Seitenfläche 2 außenseitig vor. Damit verbleibt im umgebogenen Zustand ein Spalt 10 zwischen der Abkantung 7 der Durchtrittsfläche 1 und der Abkantung 7 der Seitenfläche 2. Die Breite des Spaltes 10 entspricht zumindest der Materialstärke einer nunmehr anzubringenden, separat ausgebildeten Seitenfläche 11.

Selbstverständlich ist es auch möglich, dass vor dem Aufsetzen der Filterplatten 4 die Seitenflächen 2 bereits etwas aus der in Fig. 1a dargestellten Ausrichtung hochgebogen worden sind. Nach dem Aufsetzen der Filterplatten 4 erfolgt dann die restliche Verlagerung, bis die Seitenflächen 2 mit der jeweils angrenzenden Seitenkante 3 jeder Filterplatte 4 in Kontakt sind.

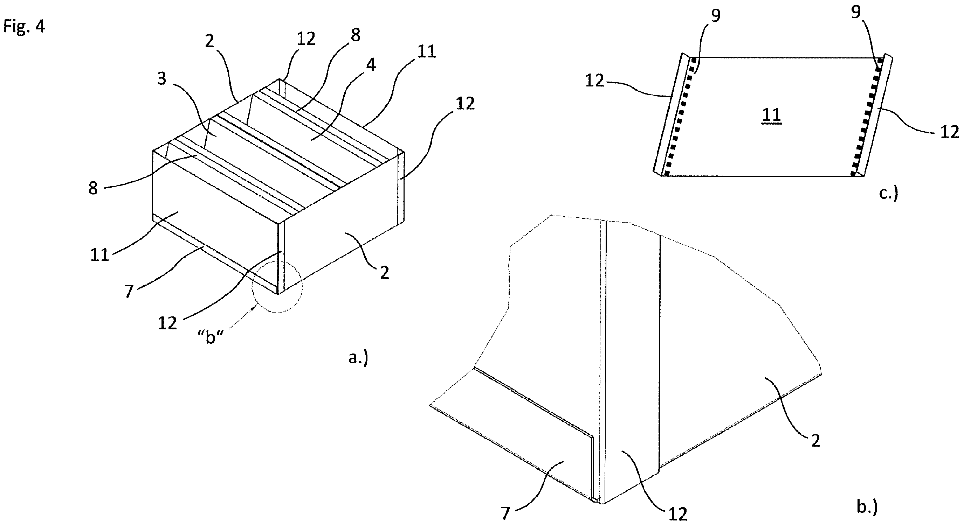

Nunmehr werden die beiden seitlichen offenen Gehäuseflächen mit je einer Seitenfläche 11 verschlossen. Jede der beiden Seitenflächen 11 wird dabei so angebracht, dass jede Seitenfläche 11 auf beiden Seiten in den Spalt 10 eingeführt ist. Dieser Zustand ist in Fig. 4a und b dargestellt. Wie den Figuren zu entnehmen ist, weisen die Kanten der beiden separat ausgebildeten Seitenflächen 11, die nach dem Zusammensetzen mit den beiden Seitenflächen 2 in Kontakt sind, jeweils eine Abkantung 12 auf. Die Höhe einer Abkantung 12 ist vorzugsweise nicht größer als 20 mm. Die Abkantungen 12 der separat ausgebildeten Seitenflächen 11 liegen nach dem Einsetzen der jeweiligen Seitenfläche 11 außen an der angrenzenden Seitenfläche 2 an.

Wie in Fig. 4c erkennbar ist, wird vor dem Anbringen einer separat ausgebildeten Seitenfläche 11 in dem Bereich, der im zusammengesetzten Zustand an der Abkantung 7 die einteilig mit der Durchtrittsfläche 1 ausgebildeten Seitenflächen 2 anliegt, ebenfalls Kleber 9 aufgebracht.

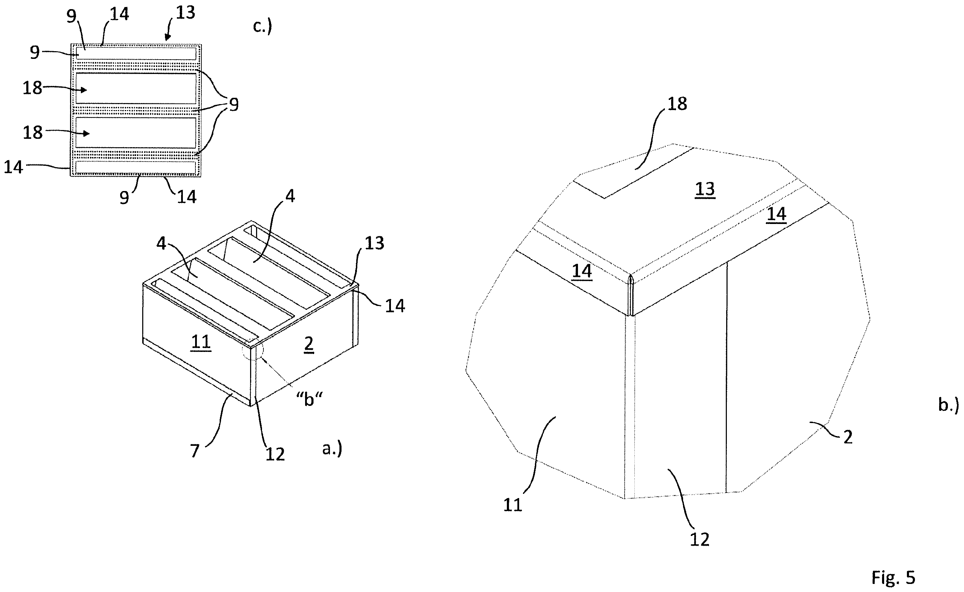

In einem letzten Schritt wird die noch oben offene Gehäusefläche mit einer anderen Durchtrittsfläche 13, deren vier Seiten jeweils eine Abkantung 14 aufweisen, verschlossen. In der Durchtrittsfläche 13 sind rechteckige Austrittsöffnungen 18 vorgesehen. Wie in Fig. 5c dargestellt, wird in den Bereichen der Innenseite der Durchtrittsfläche 13, die im zusammengesetzten Zustand mit den Längskanten 8 der Filterplatten 4 in Kontakt sind, Kleber 9 aufgebracht. Auch wird im Randbereich der Innenseite der Durchtrittsfläche 13 zumindest dort Kleber 9 aufgebracht, der nach dem Auflegen der Durchtrittsfläche 13 in Kontakt mit den Seitenflächen 2, 11 ist.

Nach dem Aufsetzen der Durchtrittsfläche 13 liegt jede der vier Abkantungen 14 der anderen Durchtrittsfläche 13 auf der Außenseite der jeweils angrenzenden Seitenflächen 2, 11 an. Die Längskanten der Eintrittsöffnungen 6 und die Längskanten der Austrittsöffnungen 18 weisen die gleiche Ausrichtung wie die Längskanten 8 jeder Filterplatte 4 auf.

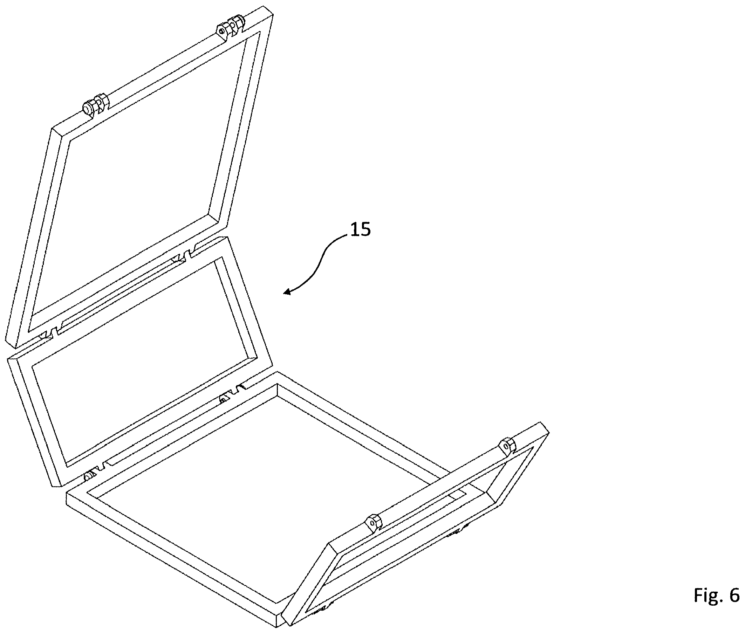

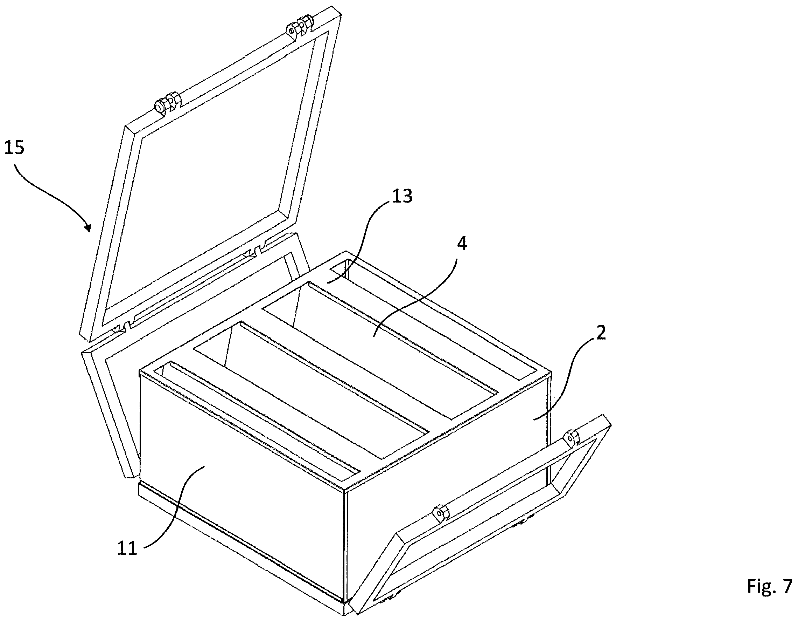

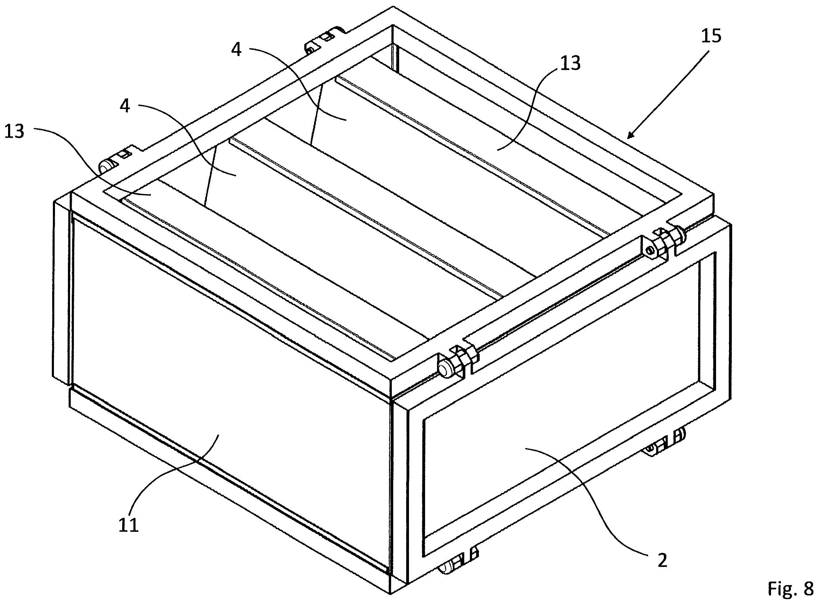

Um eine Verschiebung der Gehäuseteile bei noch nicht getrocknetem Kleber 9 zu verhindern, kann die Filterzelle in einen Rahmen 15 eingespannt werden. Wie den Fig.6 bis 8 zu entnehmen ist, besteht der Rahmen 15 aus vier Teilen, die gelenkig miteinander verbunden sind. In Fig. 8 ist der angelegte Zustand dargestellt, d. h. die beiden Enden sind miteinander verschraubt worden, so dass der Rahmen 15 nunmehr geschlossen ist. Die Filterzelle ist in dem Rahmen 15 eingespannt und kann sich nicht mehr verschieben. Nach dem Austrocknen des Klebers 9 kann der Rahmen 15 geöffnet und die fertige Filterzelle herausgenommen werden.

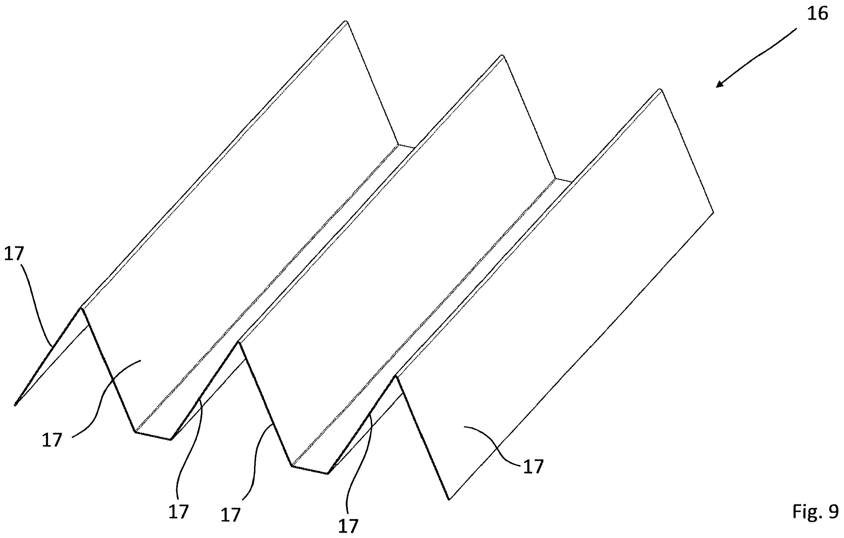

In Fig. 9 ist eine denkbare Ausgestaltung eines Anlageelementes 16 dargestellt, das dem Halten der aufgesetzten Filterplatten 4 während des Zusammenbaus dient. Das Anlageelement 16 weist in dem dargestellten Ausführungsbeispiel drei dachähnlich ausgebildete Bereiche auf, wobei jeder Bereich zwei Anlageflächen 17 aufweist. Das Anlageelement 16 wird mit seinen drei dachähnlich ausgebildeten Bereichen von unten in die drei Eintrittsöffnungen 6 eingeführt. Vorzugsweise erfolgt das Einführen vor dem Aufbringen des Klebers 9 auf die Platine nach Fig. 1. Nach dem Einführen ragen die drei dachähnlich ausgebildeten Bereiche oben aus den Eintrittsöffnungen 6 heraus und die Filterplatten 4 können auf die mit dem Kleber 9 versehenen Bereiche der Durchtrittsfläche 1 aufgesetzt werden. Die Neigung der beiden Anlageflächen 17 eines dachähnlich ausgebildeten Bereichs entspricht der gewünschten Neigung einer Filterplatte 4. Die drei dachähnlich ausgebildeten Bereiche des Anlageelementes 16 werden später aus der zusammengesetzten Filterzelle herausgezogen.

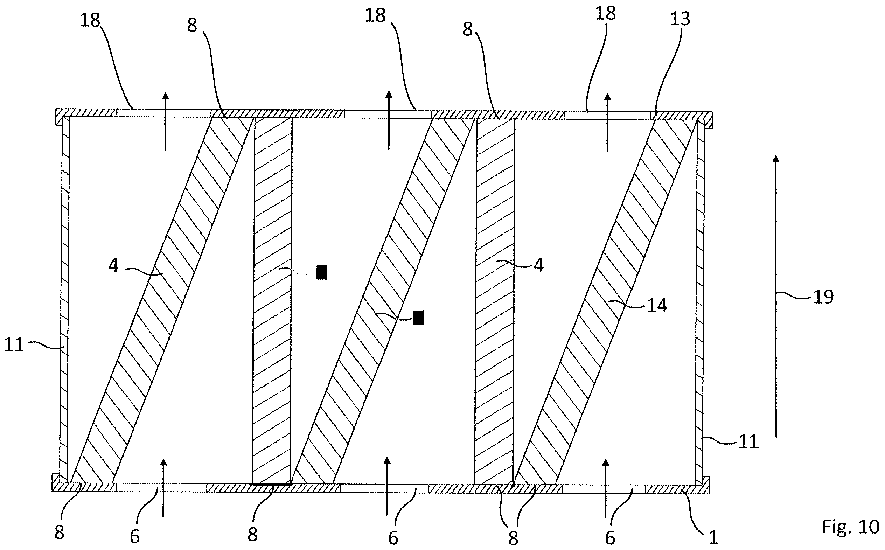

Fig. 10 zeigt eine erfindungsgemäße Filterzelle. Die Filterzelle weist ein kastenförmiges Gehäuse sowie fünf in dem Gehäuse angeordnete rechteckige Filterplatten 4 auf.

Das Gehäuse weist sechs Gehäuseflächen auf, wobei zwei Gehäuseflächen als Durchtrittsflächen 1, 13, nämlich als Einlassfläche mit drei rechteckigen Eintrittsöffnungen 6 und als Auslassfläche mit drei rechteckigen Austrittsöffnungen 18, ausgebildet sind. Die vier verbleibenden Gehäuseflächen sind als die beiden Durchtrittsflächen 1, 13 verbindende geschlossene Seitenflächen ausgebildet und bilden einen von der Einlassfläche zur Auslassfläche verlaufenden Strömungskanal mit einem rechteckigen Querschnitt.

Jede Filterplatte 4 weist zwei parallel ausgerichtete und parallel zu den Eintrittsöffnungen 6 und zu den Austrittsöffnungen 18 ausgerichtete Längskanten 8 und zwei parallele Seitenkanten 3 auf, wobei die eine Längskante 8 jeder Filterplatte 4 dichtend an der Innenseite der einen Durchtrittsfläche 1 anliegt, die andere Längskante 8 jeder Filterplatte 4 dichtend an der Innenseite der anderen Durchtrittsfläche 13 anliegt und die beiden Seitenkanten 3 jeder Filterplatte 4 dichtend an der Innenseite jeweils einer Seitenfläche anliegen.

Die Ausrichtung jeder Filterplatte 4 ist in Bezug auf die Eintrittsöffnungen 6 und die Austrittsöffnungen 18 so gewählt, dass die durch die Eintrittsöffnungen 6 in das Gehäuse einströmende und durch die Austrittsöffnungen 18 aus dem Gehäuse ausströmende Luft eine Filterplatte 4 durchströmt.

Beide Durchtrittsflächen 1, 13 weisen die gleiche Anzahl an Öffnungen, nämlich drei Eintrittsöffnungen 3 bzw. drei Austrittsöffnungen 18, auf. Jede Eintrittsöffnung 6 in der einen Durchtrittsfläche 1 ist deckungsgleich zu der jeweiligen Austrittsöffnung 18 in der anderen Durchtrittsfläche 13 angeordnet. Damit sind die Eintrittsöffnungen 6 und die korrespondierenden Austrittsöffnungen 18 in der generellen Strömungsrichtung 19 gesehen fluchtend angeordnet.

In dem dargestellten Ausführungsbeispiel weisen die Filterplatten 4 einen Verlauf nach Art von Sägezähnen eines Sägeblattes auf. Von links nach rechts gesehen sind in dem dargestellten Ausführungsbeispiel die erste, die dritte und die fünfte Filterplatte 4 schräg ausgerichtet, während die zweite und die vierte Filterplatte 4 senkrecht ausgerichtet sind. Der Anstellwinkel der ersten, der dritten und der fünften Filterplatte 4 ist insoweit ungleich dem Anstellwinkel der zweiten und der vierten Filterplatte 4.

## Patentansprüche

1. Verfahren zur Montage einer Filterzelle für eine raumlufttechnische Anlage zur Abscheidung von Feinstaub und/oder von Schwebstoffen, wie beispielsweise von Aerosolen, von toxischen Stäuben, von Viren und/oder von Bakterien, aus der Zu- und Abluft, wobei die Filterzelle ein kastenförmiges Gehäuse sowie zumindest eine in dem Gehäuse angeordnete rechteckige Filterplatte (4) aufweist, wobei das Gehäuse sechs Gehäuseflächen aufweist, wobei zwei Gehäuseflächen als Durchtrittsflächen (1, 13), nämlich als Einlassfläche mit zumindest einer, vorzugsweise rechteckigen, Eintrittsöffnung (6) und als Auslassfläche mit zumindest einer, vorzugsweise rechteckigen, Austrittsöffnung (18), ausgebildet sind und die vier verbleibenden Gehäuseflächen als die beiden Durchtrittsflächen (1, 13) verbindende geschlossene Seitenflächen ausgebildet sind und einen von der Einlassfläche zur Auslassfläche verlaufenden Strömungskanal mit rechteckigem Querschnitt bilden, wobei diese Filterplatte (4) zwei parallel ausgerichtete und parallel zu der Eintrittsöffnung (6) und zu der korrespondierenden Austrittsöffnung (18) ausgerichtete Längskanten (8) und zwei parallele Seitenkanten (3) aufweist, wobei die eine Längskante (8) dieser Filterplatte (4) dichtend an der Innenseite der einen Durchtrittsfläche (1) anliegt, die andere Längskante (8) dieser Filterplatte (4) dichtend an der Innenseite der anderen Durchtrittsfläche (13) anliegt und die beiden Seitenkanten (3) dieser Filterplatte (4) dichtend an der Innenseite jeweils einer Seitenfläche (2) anliegen, und wobei die Ausrichtung dieser Filterplatte (4) in Bezug auf die Eintrittsöffnung (6) und die Austrittsöffnung (18) so gewählt ist, dass die durch die Eintrittsöffnung (6) in das Gehäuse einströmende und durch die korrespondierende Austrittsöffnung (18) aus dem Gehäuse ausströmende Luft diese Filterplatte (4) durchströmt, **dadurch gekennzeichnet, dass** eine Durchtrittsfläche (1) jeweils mit den beiden an gegenüberliegenden Kanten angrenzenden Seitenflächen (2), die im zusammengesetzten Zustand mit einer Seitenkante (3) jeder Filterplatte (4) in Kontakt sind, einteilig ausgebildet ist und dass in Bezug auf die verbleibenden drei Gehäuseflächen die andere Durchtrittsfläche (13) sowie die beiden anderen Seitenflächen (11) jeweils separat oder aber einteilig mit zumindest einer der verbleibenden Gehäuseflächen ausgebildet ist(sind) und dass alle offenen Gehäusekanten verklebt und damit abgedichtet werden.

2. Verfahren nach dem vorhergehenden Anspruch, **dadurch gekennzeichnet, dass** vor dem Einsetzen der Filterplatte(n) (4) in das herzustellende Gehäuse auf die Innenseite jeder Durchtrittsfläche (1, 13) in dem Bereich, der im zusammengesetzten Zustand mit einer Längskante (8) jeder Filterplatte (4) in Kontakt ist, und auf die Innenseite jeder der zwei Seitenflächen (2), die im zusammengesetzten Zustand mit einer Seitenkante (3) jeder Filterplatte (4) in Kontakt sind, Kleber (9) aufgebracht wird.

3. Verfahren nach einem der vorhergehenden Ansprüche, **dadurch gekennzeichnet, dass** eine Durchtrittsfläche (1) jeweils mit den beiden an gegenüberliegenden Kanten angrenzenden Seitenflächen (2), die im zusammengesetzten Zustand mit einer Seitenkante (3) jeder Filterplatte (4) in Kontakt sind, einteilig ausgebildet ist und dass in Bezug auf die verbleibenden drei Gehäuseflächen die andere Durchtrittsfläche (13) sowie die beiden anderen Seitenflächen (11) jeweils separat ausgebildet sind,
- wobei die Durchtrittsfläche (1) und die beiden einteilig mit dieser Durchtrittsfläche (1) ausgebildeten Seitenflächen (2) als, vorzugsweise durch Stanzen erzeugte, Platine ausgebildet sind,
- wobei auf die Innenseite der Durchtrittsfläche (1) in den Bereichen, die im zusammengesetzten Zustand mit einer Längskante (8) einer Filterplatte (4) in Kontakt sind, und auf die Innenseite jeder der zwei Seitenflächen (2), die im zusammengesetzten Zustand mit einer Seitenkante (3) jeder Filterplatte (4) in Kontakt sind, Kleber (9) aufgebracht wird,
- wobei auf den mit dem Kleber (9) versehenen Bereich der Durchtrittsfläche (1) jede Filterplatte (4) mit einer ihrer beiden Längskanten (8) aufgesetzt wird,
- wobei die beiden angrenzenden Seitenflächen (2) so verlagert, vorzugsweise umgebogen, werden, bis sie mit der jeweils angrenzenden Seitenkante (2) jeder Filterplatte (3) in Kontakt sind,
- wobei die beiden seitlichen offenen Gehäuseflächen mit je einer Seitenfläche (11) verschlossen werden und
- wobei die oben offene Gehäusefläche mit der anderen Durchtrittsfläche (13) verschlossen wird, wobei vor dem Verschließen auf die freie Längskante (8) jeder Filterplatte (4) und/oder auf die Innenseite der anderen Durchtrittsfläche (13) in den Bereichen, die im zusammengesetzten Zustand mit der Längskante (8) einer Filterplatte (4) in Kontakt sind, Kleber (9) aufgebracht wird.

4. Verfahren nach einem der vorhergehenden Ansprüche, **dadurch gekennzeichnet, dass** nach dem Verschließen des Gehäuses mit der anderen Durchtrittsfläche (13) das zusammengesetzte Gehäuse, vorzugsweise bis zum Aushärten des Klebers (9), in einen Rahmen (15) gespannt wird.

5. Verfahren nach einem der vorhergehenden Ansprüche, **dadurch gekennzeichnet, dass** vor dem Aufsetzen einer Filterplatte (4) auf den mit dem Kleber (9) versehenen Bereich der Durchtrittsfläche (1), die mit den beiden an gegenüberliegenden Kanten angrenzenden Seitenflächen (2), die im zusammengesetzten Zustand mit einer Seitenkante (3) jeder Filterplatte (4) in Kontakt sind, einteilig ausgebildet ist, durch die betreffende(n) Eintritts- bzw. Austrittsöffnungen) (6, 18) ein Anlageelement (16) mit zumindest einer Anlagefläche (17) geführt wird, wobei die Anzahl an Anlageflächen (17) der Anzahl an aufzusetzenden Filterplatten (4) entspricht.

6. Verfahren nach einem der vorhergehenden Ansprüche, **dadurch gekennzeichnet, dass** sowohl die beiden gegenüberliegenden Kanten der Durchtrittsfläche (1) als auch die gegenüberliegenden Kanten der beiden Seitenflächen (2), die einteilig mit dieser Durchtrittsfläche (1) ausgebildet sind, jeweils eine Abkantung (7) aufweisen, wobei die Abkantungen (7) im zusammengesetzten Zustand des Gehäuses in Richtung der durch diese Abkantungen (7) an drei Seiten umschließenden Gehäusefläche zugewandt sind.

7. Verfahren nach dem vorhergehenden Anspruch, **dadurch gekennzeichnet, dass** der Abstand zwischen den gegenüberliegenden Abkantungen (7) der Durchtrittsfläche (1), vorzugsweise um die vierfache Materialstärke der Abkantung (7), größer ist als der Abstand zwischen den jeweils gegenüberliegenden Abkantungen (7) jeder Seitenfläche (2).

8. Verfahren nach einem der vorhergehenden Ansprüche, **dadurch gekennzeichnet, dass** bei zumindest einer separat ausgebildeten Seitenfläche (11) die beiden gegenüberliegenden Kanten, die im zusammengesetzten Zustand in Kontakt mit einer anderen Seitenfläche (2) sind, jeweils eine Abkantung (12) aufweisen, wobei jede der beiden Abkantungen (12) im zusammengesetzten Zustand des Gehäuses an der Außenseite der jeweils angrenzenden Seitenfläche (2) anliegt.

9. Verfahren nach einem der vorhergehenden Ansprüche, **dadurch gekennzeichnet, dass** zumindest zwei gegenüberliegende Kanten, vorzugsweise alle vier Kanten, der anderen Durchtrittfläche (13) jeweils eine Abkantung (14) aufweisen, wobei die andere Durchtrittfläche (13) so angebracht wird, dass jede der zwei, vorzugsweise vier, Abkantungen (14) im zusammengesetzten Zustand des Gehäuses an der Außenseite der jeweils angrenzenden Seitenfläche (2, 11) anliegt.

10. Verfahren nach einem der vorhergehenden Ansprüche, **dadurch gekennzeichnet, dass** die Durchtrittsfläche (1) und die beiden einteilig mit dieser Durchtrittsfläche (1) ausgebildeten Seitenflächen (2) und/oder die andere Durchtrittsfläche (13) und/oder die beiden anderen Seitenflächen (11) aus Blech besteht (bestehen).

11. Verfahren nach einem der vorhergehenden Ansprüche, **dadurch gekennzeichnet, dass** der Kleber (9) Polyurethan umfasst.

12. Verfahren nach einem der vorhergehenden Ansprüche, **dadurch gekennzeichnet, dass** mehrere Filterplatten (4) zickzackförmig in dem Gehäuse derart angeordnet werden, dass sich zwei benachbarte Filterplatten (4) jeweils an einer Längskante (8) berühren und die sich berührenden Längskanten (8) in dem Bereich der Innenseite der angrenzenden Durchtrittsfläche (13) in Kontakt sind, der zwischen zwei benachbarten Eintrittsöffnungen (6) bzw. zwischen zwei benachbarten Austrittsöffnungen (18) angeordnet ist.

13. Verfahren nach einem der vorhergehenden Ansprüche, **dadurch gekennzeichnet, dass** in der einen Durchtrittsfläche (1, 13) mehrere, parallel zueinander angeordnete Eintrittsöffnungen (6) und/oder in der anderen Durchtrittsfläche (13, 1) mehrere, parallel zueinander angeordnete Austrittsöffnungen (18) vorgesehen sind.

## Claims

1. Method for mounting a filter cell for a room air installation for screening out fine dust and/or substances in suspension, such as aerosols, toxic dusts, viruses and/or bacteria, from the incoming and outgoing air, wherein the filter cell comprises a box-shaped housing and at least one rectangular filter plate (4) arranged in the housing, wherein the housing comprises six housing surfaces, wherein two housing surfaces are configured as passage surfaces (1, 13), namely as an inlet surface with at least one, preferably rectangular, inlet opening (6), and as an outlet surface (18), and the four remaining housing surfaces are configured as closed side surfaces connecting the passage surfaces (1, 13), and a flow channel running from the inlet surface to the outlet surface with a rectangular cross-section, wherein this filter plate (4) comprises two longitudinal edges (8), aligned in parallel and aligned parallel to the inlet opening (6) and to the corresponding outlet opening (18), and two parallel side edges (3), wherein the one longitudinal edge (8) of this filter plate (4) is in sealing contact with the inner side of the one passage surface (1), the other longitudinal edge (8) of this filter plate (4) is in sealing contact with the inner side of the other passage surface (13), and the two side edges (3) of this filter plate (4) are in sealing contact on the inner side in each case of a side surface (2), and wherein the alignment of this filter plate (4) is selected in relation to the inlet opening (6) and the outlet opening (18) in such a way that the air flowing in through the inlet opening (6) into the housing, and flowing out through the corresponding outlet opening (18) out of the housing, flows through this filter plate (4), **characterised in that** a passage surface (1) is configured in each case as being of one piece with the two adjacent side surfaces (2) on opposing edges, which in the assembled state are in contact with a side edge (3) of each filter plate (4), and that, in relation to the remaining three housing surfaces, the other passage surface (13) and the two other side surfaces (11) is (are) in each case configured as separate, but also as of one piece with at least one of the remaining housing surfaces, and that all the open housing edges are adhesively bonded and are therefore sealed.

2. Method according to the preceding claim, **characterised in that,** before the insertion of the filter plate(s) (4) into the housing which is to be produced, adhesive (9) is applied onto the inner side of each passage surface (1, 13), in the region which in the assembled state is in contact with a longitudinal edge (8) of each filter plate (4), and onto the inner side of each of the two side surfaces (2), which in the assembled state are in contact with a side edge (3) of each filter plate (4).

3. Method according to any one of the preceding claims, **characterised in that** one passage surface (1) is configured in each case as being of one piece with the two side surfaces (2) adjacent on the opposing edges, which in the assembled state are in contact with a side edge (3) of each filter plate (4), and that, in relation to the remaining three housing surfaces, the other passage surface (13) and the other two side surfaces (11) are in each case configured separately,
- wherein the passage surface (1), and the two side surfaces (2) configured as being of one piece with this passage surface (1), are configured as sheets, preferably produced by punching,
- wherein adhesive (9) is applied onto the inner side of the passage surface (1) in the regions which, in the assembled state, are in contact with a longitudinal edge (8) of a filter plate (4), and onto the inner sides of each of the two side surfaces (2) which, in the assembled state, are in contact with a side edge (3) of each filter plate (4),
- wherein each filter plate (4) is placed with one of its two longitudinal edges (8) onto the region of the passage surface (1) which has been provided with adhesive (9),
- wherein the two adjacent side surfaces (2) are displaced, preferable bent, until they are in contact in each case with the adjacent side edge (2) of each filter plate (3),
- wherein the two open side housing surfaces are each closed by a side surface (11), and
- wherein the upper open housing surface is closed with the other passage surface (13), wherein, before the closing, adhesive (9) is applied onto the free longitudinal edge (8) of the filter plate (4) and/or onto the inner side of the other passage surface (13) in the regions which, in the assembled state, are in contact with the longitudinal edge (8) of a filter plate (4).

4. Method according to any one of the preceding claims, **characterised in that,** after the closing of the housing with the other passage surface (13), the assembled housing is tensioned in a frame (15), preferably until the adhesive (9) has hardened.

5. Method according to any one of the preceding claim, **characterised in that,** before the placing of a filter plate (4) onto the region of the passage surface (1) provided with the adhesive (9), the side surfaces (2) adjacent to the two opposing edges, which in the assembled state are in contact with a side edge (3) of each filter plate (4), are configured as being of one piece, a contact element (16) is guided through the respective inlet and outlet opening(s) (6, 18) concerned, with at least one contact surface (17), wherein the number of contact surfaces (17) corresponds to the number of filter plates (4) which are to be placed.

6. Method according to any one of the preceding claims, **characterised in that** both the two opposing edges of the passage surface (1) as well as the opposing edges of the two side surfaces (2), which are configured as being of one piece with this passage surface (1), comprise in each case a bevelled edge (7), wherein, in the assembled state of the housing, the bevelled edges (7) face in the direction towards the housing surface which is enclosed on three sides by these bevelled edges (7).

7. Method according to the preceding claim, **characterised in that** the distance interval between the opposing bevelled edges (7) of the passage surface (1) is greater, preferably by four times the material thickness of the bevelled edge (7), than the distance interval between the respective opposing bevelled edges (7) of each side surface (2).

8. Method according to any one of the preceding claims, **characterised in that** with at least one side surface (11) configured separately, the two opposing edges which, in the assembled state, are in contact with another side surface (2), in each case comprise a bevelled edge (12), wherein each of the two bevelled edges (12), in the assembled state of the housing, are in contact on the outside of the respective adjacent side surface (2).

9. Method according to any one of the preceding claims, **characterised in that** at least two opposing edges, and preferably all four edges, of the other passage surface (13) in each case comprise a bevelled edging (14), wherein the other passage surface (13) is arranged in such a way that each of the two, and preferably four, bevelled edges (14) are, in the assembled state of the housing, in contact on the outside of the respective adjacent side surface (2, 11).

10. Method according to any one of the preceding claims, **characterised in that** the passage surface (1) and the two side surfaces (2), configured as being of one piece with this passage surface (1), and/or the other passage surface (13), and/or the two other side surfaces (11) consist(s) of sheet metal.

11. Method according to any one of the preceding claims, **characterised in that** the adhesive (9) comprises polyurethane.

12. Method according to any one of the preceding claims, **characterised in that** several filter plates (4) are arranged in a zigzag shape in the housing, in such a way that two adjacent filter plates (4) are in each case in contact on a longitudinal edge (8), and the longitudinal edges (8) touching one another are in contact in a region of the inner side of the adjacent passage surface (13), which is arranged between two adjacent inlet openings (6) or, respectively, between two adjacent outlet openings (18).

13. Method according to any one of the preceding claims, **characterised in that** several inlet openings (6), arranged parallel to one another, are provided in the one passage surface (1, 13), and/or several outlet openings (18), arranged parallel to one another, are provided in the other passage surface (13, 1).

## Revendications

1. Procédé dévolu au montage d'une cellule filtrante destinée à une installation technique de circulation d'air ambiant et conçue pour séparer, d'avec l'air entrant et l'air expulsé, des poussières fines et/ou des matières en suspension comme, par exemple, des aérosols, des poussières toxiques, des virus et/ou des bactéries, ladite cellule filtrante étant munie d'un boîtier en forme de caisson, ainsi que d'au moins une plaque rectangulaire de filtration (4) logée dans ledit boîtier, lequel boîtier compte six surfaces, sachant que deux surfaces dudit boîtier sont réalisées en tant que surfaces de passage (1, 13), plus précisément en tant que surface d'admission pourvue d'au moins un orifice d'entrée (6) préférentiellement rectangulaire, et en tant que surface d'évacuation dotée d'au moins un orifice de sortie (18) préférentiellement rectangulaire, et sachant que les quatre surfaces restantes dudit boîtier sont réalisées en tant que surfaces latérales fermées qui relient les deux surfaces de passage (1, 13) et forment un canal d'écoulement de section transversale rectangulaire, s'étendant vers ladite surface d'évacuation à partir de ladite surface d'admission, cette plaque de filtration (4) comprenant deux arêtes longitudinales (8) alignées parallèlement et orientées parallèlement à l'orifice d'entrée (6) et à l'orifice de sortie (18) concordant, et deux arêtes latérales parallèles (3), sachant que l'une des arêtes longitudinales (8) de cette plaque de filtration (4) est en applique, de manière étanche, contre la face intérieure de l'une (1) des surfaces de passage, que l'autre arête longitudinale (8) de cette plaque de filtration (4) est en applique, de manière étanche, contre la face intérieure de l'autre surface de passage (13), et que les deux arêtes latérales (3) de cette plaque de filtration (4) sont en applique, de manière étanche, contre la face intérieure d'une surface latérale (2) respective, et sachant que l'orientation de cette plaque de filtration (4) est choisie, par rapport à l'orifice d'entrée (6) et à l'orifice de sortie (18), de façon telle que l'air, affluant dans le boîtier en franchissant ledit orifice d'entrée (6) et quittant ledit boîtier en franchissant ledit l'orifice de sortie (18) concordant, circule intégralement par cette plaque de filtration (4), **caractérisé par le fait qu'**une surface de passage (1) est réalisée, à chaque fois, d'un seul tenant avec les deux surfaces latérales (2) qui sont limitrophes d'arêtes opposées et sont en contact, à l'état assemblé, avec une arête latérale (3) de chaque plaque de filtration (4) ; **par le fait que**, concernant les trois surfaces restantes du boîtier, l'autre surface de passage (13), de même que les deux autres surfaces latérales (11), sont respectivement réalisées de façon distincte, voire d'un seul tenant avec au moins l'une desdites surfaces restantes du boîtier ; et **par le fait que** toutes les arêtes ouvertes dudit boîtier sont collées, et sont ainsi rendues étanches.

2. Procédé selon la revendication précédente, **caractérisé par le fait que**, préalablement à l'insertion de la ou des plaque(s) de filtration (4) dans le boîtier à constituer, de l'adhésif (9) est déposé sur la face intérieure de chaque surface de passage (1, 13) dans la région en contact, à l'état assemblé, avec une arête longitudinale (8) de chaque plaque de filtration (4), et sur la face intérieure de chacune des deux surfaces latérales (2) en contact, à l'état assemblé, avec une arête latérale (3) de chaque plaque de filtration (4).

3. Procédé selon l'une des revendications précédentes, **caractérisé par le fait qu'**une surface de passage (1) est réalisée, à chaque fois, d'un seul tenant avec les deux surfaces latérales (2) qui sont limitrophes d'arêtes opposées et sont en contact, à l'état assemblé, avec une arête latérale (3) de chaque plaque de filtration (4) ; et **par le fait que**, concernant les trois surfaces restantes du boîtier, l'autre surface de passage (13), de même que les deux autres surfaces latérales (11), sont respectivement réalisées de façon distincte,
- sachant que la surface de passage (1), et les deux surfaces latérales (2) réalisées d'un seul tenant avec cette surface de passage (1), sont conçues sous la forme d'une platine préférentiellement produite par emboutissage,
- sachant que de l'adhésif (9) est déposé sur la face intérieure de ladite surface de passage (1) dans les régions en contact, à l'état assemblé, avec une arête longitudinale (8) d'une plaque de filtration (4), et sur la face intérieure de chacune des deux surfaces latérales (2) en contact, à l'état assemblé, avec une arête latérale (3) de chaque plaque de filtration (4),
- sachant que chaque plaque de filtration (4) est mise en place, par l'une de ses deux arêtes longitudinales (8), sur la région de ladite surface de passage (1) qui est munie de l'adhésif (9),
- sachant que les deux surfaces latérales (2) limitrophes sont déplacées, de préférence repliées jusqu'à ce qu'elles soient en contact avec l'arête latérale (2), respectivement limitrophe, de chaque plaque de filtration (3),
- sachant que les deux surfaces latérales ouvertes du boîtier sont obturées par une surface latérale (11) respective, et
- sachant que la surface dudit boîtier, ouverte en partie haute, est obturée par l'autre surface de passage (13), auquel cas, préalablement à l'obturation, de l'adhésif (9) est déposé sur l'arête longitudinale libre (8) de chaque plaque de filtration (4) et/ou sur la face intérieure de l'autre surface de passage (13) dans les régions en contact, à l'état assemblé, avec l'arête longitudinale (8) d'une plaque de filtration (4).

4. Procédé selon l'une des revendications précédentes, **caractérisé par le fait qu'**à l'issue de l'obturation du boîtier par l'autre surface de passage (13), le boîtier assemblé est enchâssé dans un cadre (15), de préférence jusqu'au durcissement complet de l'adhésif (9).

5. Procédé selon l'une des revendications précédentes, **caractérisé par le fait que**, préalablement à la mise en place d'une plaque de filtration (4) sur la région de la surface de passage (1) qui est munie de l'adhésif (9) et est réalisée d'un seul tenant avec les deux surfaces latérales (2) limitrophes d'arêtes opposées et en contact, à l'état assemblé, avec une arête latérale (3) de chaque plaque de filtration (4), un élément d'appui (16), pourvu d'au moins une surface d'appui (17), est guidé à travers l'(les) orifice(s) respectif(s) d'entrée ou de sortie (6, 18), le nombre des surfaces d'appui (17) correspondant au nombre de plaques de filtration (4) à mettre en place.

6. Procédé selon l'une des revendications précédentes, **caractérisé par le fait que** tant les deux arêtes opposées de la surface de passage (1), que les arêtes opposées des deux surfaces latérales (2) réalisées d'un seul tenant avec cette surface de passage (1), sont respectivement dotées d'un rebord coudé (7), sachant que les rebords coudés (7) pointent, à l'état assemblé du boîtier, en direction de la surface dudit boîtier qui est cernée sur trois côtés par ces rebords coudés (7).

7. Procédé selon la revendication précédente, **caractérisé par le fait que** la distance entre les rebords coudés opposés (7) de la surface de passage (1) est supérieure, de préférence du quadruple de l'épaisseur de matériau du rebord coudé (7), à la distance séparant les rebords coudés (7), respectivement opposés, de chaque surface latérale (2).

8. Procédé selon l'une des revendications précédentes, **caractérisé par le fait qu'**en présence d'au moins une surface latérale (11) réalisée de façon distincte, les deux arêtes opposées, en contact avec une autre surface latérale (2) à l'état assemblé, sont munies d'un rebord coudé (12) respectif, chacun des deux rebords coudés (12) étant en applique, à l'état assemblé du boîtier, contre la face extérieure de la surface latérale (2) respectivement limitrophe.

9. Procédé selon l'une des revendications précédentes, **caractérisé par le fait qu'**au moins deux arêtes opposées, de préférence la totalité des quatre arêtes de l'autre surface de passage (13), sont pourvues d'un rebord coudé (14) respectif, ladite autre surface de passage (13) étant agencée de façon telle que chacun des deux, préférentiellement des quatre rebords coudés (14) soit en applique, à l'état assemblé du boîtier, contre la face extérieure de la surface latérale (2, 11) respectivement limitrophe.

10. Procédé selon l'une des revendications précédentes, **caractérisé par le fait que** la surface de passage (1) et les deux surfaces latérales (2) réalisées d'un seul tenant avec cette surface de passage (1), et/ou l'autre surface de passage (13), et/ou les deux autres surfaces latérales (11), consiste(nt) en de la tôle.

11. Procédé selon l'une des revendications précédentes, **caractérisé par le fait que** l'adhésif (9) inclut du polyuréthane.

12. Procédé selon l'une des revendications précédentes, **caractérisé par le fait que** plusieurs plaques de filtration (4) sont disposées en zigzag, dans le boîtier, d'une manière telle que deux plaques de filtration (4) voisines se touchent, à chaque fois, au niveau d'une arête longitudinale (8) et que les arêtes longitudinales (8), se touchant, soient en contact dans la région de la face intérieure de la surface limitrophe de passage (13) qui est interposée entre deux orifices d'entrée (6) voisins, respectivement entre deux orifices de sortie (18) voisins.

13. Procédé selon l'une des revendications précédentes, **caractérisé par le fait que** plusieurs orifices d'entrée (6) disposés parallèlement les uns aux autres et plusieurs orifices de sortie (18) disposés parallèlement les uns aux autres sont prévus, respectivement, dans l'une (1, 13) des surfaces de passage et/ou dans l'autre surface de passage (13, 1).
